(19) Europäisches Patentamt
European Patent Office
Office européen des brevets

(11) **EP 3 836 480 A1**

(12) **DEMANDE DE BREVET EUROPEEN**

(43) Date de publication:
**16.06.2021 Bulletin 2021/24**

(51) Int Cl.:
*H04L 9/30* (2006.01)   *H04L 9/32* (2006.01)

(21) Numéro de dépôt: **20206595.9**

(22) Date de dépôt: **10.11.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **12.12.2019 FR 1914256**

(71) Demandeur: **IDEMIA France**
**92400 Courbevoie (FR)**

(72) Inventeurs:
• SOURDRILLE, Arnaud
**92400 COURBEVOIE (FR)**
• RONDEPIERRE, Franck
**92400 COURBEVOIE (FR)**

(74) Mandataire: **Cabinet Beau de Loménie**
**158, rue de l'Université**
**75340 Paris Cedex 07 (FR)**

(54) **PROCEDE ET DISPOSITIF PERMETTANT DE DETERMINER LA POSSIBILITE D'UTILISATION D'UNE CLEF CRYPTOGRAPHIQUE POUR EFFECTUER UNE OPERATION CRYPTOGRAPHIQUE**

(57) Procédé et dispositif permettant de déterminer la possibilité d'utilisation d'une clef cryptographique pour effectuer une opération cryptographique.

La clef cryptographique est définie dans un domaine comportant des paramètres. Le procédé est mis en oeuvre par un premier dispositif électronique intégré dans un document d'identification et comporte des étapes de:
- obtention de la clef en provenance d'un deuxième dispositif électronique ;
- obtention d'un identifiant unique du domaine, cet identifiant unique étant calculé à partir des paramètres du domaine;
- recherche de l'identifiant unique dans une liste comportant des identifiants de domaines validés, cette liste étant sauvegardée dans une mémoire du premier dispositif ;
- si et seulement si l'identifiant unique n'est pas retrouvé dans la liste,
-- validation du domaine ; et
-- enregistrement de l'identifiant unique dans la liste uniquement si la validation est réussie ;
la clef pouvant être utilisée pour effectuer l'opération cryptographique si et seulement si l'identifiant unique est enregistré dans la liste.

[Fig. 1]

**Description**

Technique antérieure

L'invention se rapporte au domaine général de la cryptographie à clef publique, appelée également cryptographie asymétrique. Elle concerne plus particulièrement le contrôle de clefs cryptographiques avant leur utilisation.

Lorsqu'un dispositif électronique obtient une clef cryptographique, il est souhaitable qu'il en vérifie la fiabilité pour savoir s'il peut l'utiliser ou non pour effectuer une opération cryptographique particulière.

Nous rappelons qu'une clef cryptographique est définie dans un domaine. Un domaine est un groupe mathématique. C'est un ensemble G, ayant une loi de composition interne *, et un générateur d'ordre q.

En particulier, un domaine D d'un corps fini Fp, est un sous-groupe des éléments modulo p avec comme loi de composition interne la multiplication modulaire et ayant pour générateur un élément aléatoire d'ordre q, où q est un nombre premier diviseur de p-1.

En particulier, un domaine D d'une courbe elliptique E est un sous-groupe de la courbe elliptique E définie sur un corps fini Fp et définissant une loi d'addition +, ce sous-groupe ayant un élément générateur G d'ordre q, où p et q sont des nombres entiers. L'élément générateur G, le nombre p correspondant au nombre d'éléments du corps fini Fp, et le nombre q constituent des paramètres du domaine D.

Nous supposons ici qu'une clef est fiable et qu'il est possible d'utiliser la clef pour effectuer une opération cryptographique si et seulement si le domaine dans lequel la clef est définie est validé.

A titre d'exemple, lorsqu'un individu utilise son passeport à une borne de contrôle de passeports (typiquement aux frontières douanières), la borne de contrôle et une puce électronique intégrée dans le passeport communiquent entre elles et échangent des clefs cryptographiques. Le domaine de la clef fournie par la puce constitue une indication sur le pays d'émission du passeport. La borne de contrôle peut vérifier la possibilité d'utiliser la clef fournie par la puce du passeport pour effectuer une opération cryptographique donnée, par exemple pour vérifier une signature pour autoriser un accès de l'individu à un pays ou à une zone d'embarquement.

De même, la puce du passeport peut vérifier la possibilité d'utiliser la clef fournie par la borne de contrôle pour effectuer une opération cryptographique, telle qu'une opération pour autoriser la borne à lire des informations personnelles du titulaire du passeport, enregistrées dans une mémoire de la puce, telles que le numéro du passeport, le nom et le prénom du titulaire du passeport, etc.

En pratique, chaque pays dispose de deux ou trois domaines qui permettent de l'identifier. A titre d'exemple, la France dispose d'un domaine dont le nom standardisé est « secP256r1 ». Tous les passeports délivrés par un pays et les bornes de contrôle gérées par ce pays ont des clefs cryptographiques définies dans un domaine de ce pays.

Conformément à l'état de la technique, lorsqu'un dispositif électronique reçoit une clef cryptographique, il valide son domaine avant d'utiliser la clef. La validation du domaine comporte une vérification de relations mathématiques entre des paramètres du domaine. Cette validation constitue un calcul mathématique lourd, qui consomme de l'énergie et qui requiert une capacité CPU (pour « Central Processing Unit » en anglais) et un temps de calcul importants.

Sur le plan pratique et pour l'exemple cité ci-dessus, la validation d'un domaine se traduit par une attente au niveau de la borne de contrôle, jusqu'à ce que la borne et la puce intégrée au passeport valident les domaines des clefs échangées. Cette attente peut dégrader la qualité d'expérience du titulaire du passeport, voire entraîner une file d'attente de passagers au niveau de la borne de contrôle.

On connaît une solution pour accélérer la vérification de la possibilité d'utiliser une clef pour effectuer une opération cryptographique. Cette solution consiste à ce que le dispositif électronique qui vérifie la fiabilité d'une clef donnée, enregistre cette clef dans sa mémoire. Ainsi, si le dispositif reçoit de nouveau la même clef, il la retrouve dans sa mémoire et détermine directement qu'il peut l'utiliser pour effectuer une opération cryptographique, sans avoir besoin de valider le domaine de définition de la clef.

En reprenant l'exemple de l'utilisation du passeport à la borne de contrôle, pour un premier passage du titulaire du passeport par la borne, la puce intégrée au passeport reçoit la clef de la borne et valide le domaine de définition de cette clef, puis enregistre la clef dans une mémoire de la puce. Lorsque l'individu passe une autre fois par la même borne, la puce du passeport reçoit de nouveau la même clef de la borne, elle la retrouve dans sa mémoire et déduit directement, sans avoir besoin de revalider le domaine, que la clef peut être utilisée pour effectuer une opération cryptographique.

Cette solution permet d'accélérer le passage du titulaire du passeport au-delà de son deuxième passage par la borne de contrôle.

Cependant, cette solution n'est pas satisfaisante car le titulaire du passeport ne repasse pas forcément par la même borne de contrôle.

Supposons que le titulaire du passeport passe par une deuxième borne de contrôle gérée par le même pays que la première borne, la puce du passeport reçoit une nouvelle clef, celle de la deuxième borne. La nouvelle clef n'étant pas enregistrée auparavant dans la mémoire de la puce du passeport, la puce valide le domaine de définition de cette nouvelle clef, pourtant ce domaine peut être déjà validé vu que les deux bornes sont gérées par le même pays et que les clefs des deux bornes sont potentiellement définies dans le même domaine.

De plus, cette solution est conditionnée par les durées d'expiration des clefs cryptographiques. En effet, pour des raisons de sécurité, les clefs cryptographiques ont une durée de vie limitée. Même si le titulaire du passeport repasse par la même borne de contrôle, il est possible que la clef de la borne ait été renouvelée depuis la dernière utilisation du passeport à la borne. Dans ce cas, la puce du passeport a besoin de valider le domaine de la nouvelle clef de la borne, pourtant cette nouvelle clef peut être définie dans le même domaine que l'ancienne clef de la borne.

Il existe donc un besoin en une solution permettant de déterminer la possibilité d'utilisation d'une clef cryptographique pour effectuer une opération cryptographique, et qui ne présente pas les inconvénients des méthodes connues de l'état de l'art.

Exposé de l'invention

L'invention vise un procédé permettant de déterminer la possibilité d'utilisation d'une clef cryptographique pour effectuer une opération cryptographique, cette clef cryptographique étant définie dans un domaine comportant des paramètres. Le procédé selon l'invention est mis en oeuvre par un premier dispositif électronique intégré dans un document d'identification. Ce procédé comporte des étapes de:

- obtention de la clef en provenance d'un deuxième dispositif électronique ;
- obtention d'un identifiant unique du domaine, cet identifiant unique étant calculé à partir des paramètres du domaine;
- recherche de l'identifiant unique dans une liste comportant des identifiants de domaines validés, cette liste étant sauvegardée dans une mémoire du premier dispositif ;
- si et seulement si l'identifiant unique n'est pas retrouvé dans la liste,

  -- validation du domaine ; et
  -- enregistrement de l'identifiant unique dans la liste uniquement si la validation est réussie ;

la clef pouvant être utilisée pour effectuer l'opération cryptographique si et seulement si l'identifiant unique est enregistré dans la liste.

Corrélativement, l'invention vise un dispositif électronique, dit premier dispositif électronique, intégré dans un document d'identification et configuré pour déterminer la possibilité d'utilisation d'une clef cryptographique pour effectuer une opération cryptographique, la clef cryptographique étant définie dans un domaine comportant des paramètres, ledit premier dispositif comportant :

- un module de communication avec un deuxième dispositif électronique, ce module de communication étant configuré pour obtenir la clef cryptographique en provenance du deuxième dispositif ;
- un module d'obtention d'un identifiant unique du domaine, cet identifiant unique étant calculé à partir des paramètres du domaine;
- un module de validation configuré pour :

  -- rechercher l'identifiant unique dans une liste comportant des identifiants de domaines validés, cette liste étant sauvegardée dans une mémoire du premier dispositif ; et
  -- si et seulement si l'identifiant unique n'est pas retrouvé dans la liste, valider le domaine et enregistrer l'identifiant unique dans la liste uniquement si la validation est réussie ;

la clef pouvant être utilisée pour effectuer l'opération cryptographique si et seulement si l'identifiant unique est enregistré dans la liste.

Le premier dispositif, conforme à l'invention, met en oeuvre le procédé permettant de déterminer la possibilité d'utilisation de la clef, conforme à l'invention.

Les caractéristiques et avantages du procédé selon l'invention présentés ci-après s'appliquent de la même façon au premier dispositif conforme à l'invention, et vice-versa.

L'identifiant unique du domaine peut être calculé à partir de tous les paramètres de ce domaine. L'identifiant unique peut être l'empreinte du domaine.

L'identifiant unique peut être un nom d'un domaine relatif à un pays donné, notamment lorsque ce nom de domaine identifie ce pays seul, autrement dit lorsque ce nom de domaine n'est pas relatif à deux pays ou plus.

L'invention permet d'éviter les validations redondantes. En effet, selon le procédé de l'invention, un domaine n'est validé sauf s'il n'était pas validé auparavant.

L'invention permet ainsi de réduire la capacité de traitement CPU, la consommation énergétique, et le temps requis pour déterminer la possibilité d'utilisation de la clef cryptographique pour effectuer l'opération cryptographique.

De plus, l'invention permet de réduire la mémoire de stockage requise au niveau du premier dispositif : selon l'invention, un domaine validé n'est enregistré qu'une seule fois quel que soit le nombre de clefs associées à ce domaine, tandis que les solutions de l'art antérieur requièrent, pour chaque clef cryptographique, la validation de son domaine et l'enregistrement de la clef et du domaine.

Dès lors que le domaine d'une clef a été validé, et même si la clef expire, la validation de ce domaine n'est plus effectuée tant que son identifiant unique est enregistré dans la liste.

En réduisant le temps requis pour déterminer la possibilité d'utilisation de la clef cryptographique pour effectuer l'opération cryptographique, l'invention permet d'améliorer l'expérience de l'utilisateur du document d'identification.

En mettant en oeuvre le procédé de l'invention, lorsqu'un titulaire d'un passeport passe pour une première fois par une borne de contrôle d'un pays donné, la puce intégrée au passeport (premier dispositif au sens de l'invention) reçoit une clef cryptographique de la part de la borne de contrôle (deuxième dispositif au sens de l'invention) et valide le domaine de cette clef. Si le titulaire du passeport passe ultérieurement par une autre borne de contrôle gérée par le même pays, et ayant une clef cryptographique définie dans le même domaine, la puce intégrée au passeport ne revalide pas le domaine et détermine que la clef de la deuxième borne peut être utilisée pour effectuer une opération cryptographique. Ainsi, au-delà du deuxième passage du titulaire du passeport par une borne de contrôle de ce pays, sa durée d'attente est réduite.

Au sens de l'invention, le premier dispositif conforme à l'invention est un module sécurisé intégré dans le document d'identification.

Le premier dispositif peut être un circuit intégré, ou une puce électronique, ou une étiquette radio de type RFID (pour « Radio Frequency Identification » en anglais), ou un processeur de signal numérique DSP (pour « Digital Signal Processor » en anglais) ou un module logiciel simulant une puce électronique.

Le premier dispositif conforme à l'invention comporte une mémoire, par exemple une mémoire non volatile.

Dans un mode de réalisation de l'invention, le document d'identification (dans lequel le premier dispositif conforme à l'invention est intégré) est un passeport, une carte d'identité nationale, un permis de conduire, une carte bancaire, une carte d'assurance, un titre personnel de transport ou une carte permettant un accès à un espace sous identification. Cette liste d'exemples n'est pas exhaustive.

Des données personnelles du titulaire du document d'identification peuvent être enregistrées dans la mémoire du premier dispositif, tels que son nom, son prénom, sa date de naissance, etc. Dans un mode de réalisation, le premier dispositif comporte des moyens configurés pour autoriser la lecture et/ou la modification de ces données par une entité tierce seulement après une authentification de cette entité et après avoir déterminé qu'une clef cryptographique de l'entité tierce peut être utilisée pour l'autorisation de la lecture et/ou la modification des données.

Dans un mode de réalisation de l'invention, l'opération cryptographique est une opération parmi :

- une opération autorisant un accès d'un utilisateur du document d'identification à une zone géographique déterminée, par exemple une opération permettant l'accès du titulaire d'un passeport à entrer dans un pays, ou une opération permettant le passage d'un voyageur à une zone d'accès à un train ; ou
- une opération effectuant des statistiques sur la présence de l'utilisateur dans une zone géographique déterminée, par exemple une opération de surveillance du temps passé par un salarié dans une entreprise ; ou
- une opération de consultation ou de modification de données enregistrées dans la mémoire du premier dispositif, tel qu'une réduction de points d'un permis de conduire, ou un changement de nom d'une personne suite à un changement d'état civil.

Les exemples de documents d'identification déjà cités permettent d'identifier un individu. Alternativement, le document d'identification peut identifier un objet ou un animal. A titre d'exemple, le document d'identification peut être un composant implanté sous la peau d'un animal, le premier dispositif conforme à l'invention permettant d'enregistrer des données identifiant l'animal.

Le premier dispositif conforme à l'invention communique avec le deuxième dispositif via un réseau de communication, par exemple via un réseau de communication en champ proche NFC (pour « Near Field Communication » en anglais), ou via un réseau de communication filaire.

Dans un mode de réalisation de l'invention, le deuxième dispositif électronique est un dispositif de fabrication du premier dispositif ou un dispositif de mise à jour du premier dispositif.

A titre d'exemple, lorsque le premier dispositif est un module sécurisé intégré dans un passeport, le deuxième dispositif peut être un dispositif de fabrication de tels modules sécurisés ou un dispositif de contrôle douanier.

Le procédé selon l'invention peut être utilisé à la fabrication du premier dispositif (le deuxième dispositif étant un dispositif de fabrication), ou au cours de son utilisation (le deuxième dispositif étant un dispositif de mise à jour).

Pour quantifier le gain de l'invention, nous considérons à titre d'exemple la fabrication ou la production de 10 millions de passeports biométriques, chaque passeport contenant 20 clefs Ki à base de courbes elliptiques sur un domaine D dont 10 couples de clefs, comportant chacun une clef publique et une clef privée, le domaine D comporte sept paramètres Pi dont chaque paramètre a une taille de 528 bits, chaque clef Ki a une taille de 528 bits également.

Dans cet exemple, chaque puce électronique constitue un premier dispositif conforme à l'invention. Un dispositif de fabrication de ces puces constitue un deuxième dispositif selon l'invention. Le dispositif de fabrication attribue 20 clefs à chaque puce d'un passeport. Chaque puce obtient les 20 clefs et les enregistre dans sa mémoire après la validation de leur domaine.

Nous quantifions le gain de l'invention en terme d'espace mémoire et de temps requis pour la fabrication de puces électroniques qui seront intégrées dans les passeports biométriques.

Nous considérons l'hypothèse que la validation du domaine D dure 500 ms.

Selon une méthode de l'art antérieur, la fabrication d'une puce électronique d'un passeport nécessite la validation du domaine D et l'enregistrement des 7 paramètres Pi, pour chaque couple de clefs. Le domaine D est validé 10 fois, une fois pour chaque couple de clefs. La fabrication d'une puce électronique d'un passeport selon la méthode de l'art antérieur dure 5 secondes (soit 500 ms *10, pour les 10 couples de clefs). La fabrication de 10 millions de puces requiert 57 jours.

La fabrication d'une puce électronique d'un passeport selon la méthode de l'art antérieur requiert un espace de stockage de 47520 bits, soit 7 fois 528 bits (pour les 7 paramètres Pi) multiplié par 10 (pour les 10 couples de clefs Ki) en addition avec 20 fois 528 bits (pour l'ensemble des clefs Ki). La fabrication de 10 millions de puces électroniques pour des passeports biométriques selon la méthode de l'art antérieur requiert un espace de stockage de 442 Go (Géga Octets). Par convention, 1 Go = 1024^3 octets, et un octet est égal à 8 bits.

En mettant en oeuvre le procédé de l'invention, le domaine D n'est validé qu'une seule fois, et ses paramètres Pi ne sont enregistrés qu'une seule fois. la fabrication d'une puce d'un passeport dure 500 ms, le domaine D étant validé une seule fois.

La fabrication d'une puce d'un passeport selon le procédé de l'invention requiert un espace mémoire de 14256, soit 7 fois 528 bits (pour les 7 paramètres Pi) en addition avec 20 fois 528 bits (pour l'ensemble des clefs Ki).

La fabrication de 10 millions de passeports selon le procédé de l'invention requiert un espace mémoire de 132 Go et 5.7 jours.

Dans un mode de réalisation précédemment décrit, en plus de la clef cryptographique, le premier dispositif conforme à l'invention obtient également, en provenance du deuxième dispositif, les paramètres du domaine. L'étape d'obtention de l'identifiant unique comporte un calcul de cet identifiant, par le premier dispositif conforme à l'invention.

Dans ce mode, le module d'obtention d'un identifiant unique est configuré pour calculer l'identifiant unique.

Dans un autre mode, le premier dispositif conforme à l'invention obtient la clef et l'identifiant unique calculé en provenance du deuxième dispositif, l'identifiant unique étant calculé par le deuxième dispositif. Ce mode permet de minimiser les échanges entre le premier et le deuxième dispositif. En effet, les paramètres du domaine sont plus nombreux et peuvent consommer plus d'espace mémoire que l'identifiant unique.

Dans un mode de réalisation, le procédé conforme à l'invention comporte en outre, si et seulement si l'identifiant unique est enregistré dans la liste d'identifiants de domaines validés, une étape d'enregistrement de la clef cryptographique en association avec l'identifiant unique dans la mémoire du premier dispositif électronique.

Dans ce mode de réalisation, le premier dispositif conforme à l'invention comporte en outre un module d'association configuré pour enregistrer la clef cryptographique en association avec l'identifiant unique dans la mémoire du premier dispositif électronique si et seulement si l'identifiant unique est enregistré dans la liste.

Ce mode peut être mis en oeuvre lors de la fabrication du premier dispositif conforme à l'invention, pour attribuer la clef au premier dispositif.

L'enregistrement de la clef en association avec l'identifiant unique du domaine peut être utile pour des futures utilisations de la clef pour effectuer des opérations cryptographiques.

L'intérêt de ce mode peut apparaître lors d'une ultérieure mise en oeuvre du procédé. Lorsque le premier dispositif obtient une nouvelle clef, il peut chercher la clef obtenue dans la mémoire du premier dispositif. S'il retrouve la clef dans la mémoire (parce qu'elle a été enregistrée précédemment), il détermine directement que cette clef peut être utilisée pour effectuer l'opération cryptographique.

Dans un mode de réalisation, le procédé de l'invention comporte une étape de recherche de la clef dans la mémoire du premier dispositif, les étapes d'obtention de l'identifiant unique, de recherche de l'identifiant unique, de validation, d'enregistrement de l'identifiant unique, et éventuellement d'enregistrement de ladite clef étant mises en oeuvre seulement si la clef n'est pas déjà enregistrée dans la mémoire.

Dans un mode de réalisation, le procédé selon l'invention comporte en outre, suite à l'étape d'enregistrement de la clef cryptographique en association avec l'identifiant unique, une étape d'incrémentation d'un compteur de clefs cryptographiques associées à cet identifiant unique.

Ce mode permet au premier dispositif de surveiller le nombre de clefs associées à chaque identifiant unique.

A titre d'exemple, le premier dispositif peut supprimer de sa mémoire les domaines dont le nombre de clefs associées est inférieur à un certain seuil depuis une durée déterminée. Considérons l'exemple d'une puce intégrée dans un passeport, si une seule clef est associée à un domaine donné depuis un an, la puce peut considérer que ce domaine correspond à un pays peu visité et décide de supprimer le domaine de sa mémoire car elle estime qu'il est peu probable d'obtenir une nouvelle clef définie dans ce domaine.

Dans un mode de réalisation, l'enregistrement de la clef cryptographique en association avec l'identifiant unique de son domaine comporte aussi un enregistrement d'une information sur la date d'expiration de cette clef. A l'expiration de la clef, le premier dispositif conforme à l'invention décrémente le compteur de clefs associées au même domaine (c'est-à-dire le domaine auquel la clef expirée était associée).

Grâce au compteur des clefs associées à un domaine validé, le premier dispositif électronique conforme à l'invention peut détecter les domaines validés qui n'ont plus de clefs associées et supprime alors ces domaines pour libérer de l'espace mémoire. Un domaine qui n'a aucune clef associée peut être nommé par un domaine orphelin.

Nous appelons de façon équivalente, le compteur de clefs associées à un domaine (ou à l'identifiant unique de ce domaine) par le compteur de liens de ce domaine (ou de son identifiant unique).

Nous appelons de façon équivalente, l'association d'une clef cryptographique à un domaine (ou à l'identifiant unique de ce domaine), l'établissement d'un lien entre cette clef et ce domaine (ou l'identifiant du domaine).

L'invention peut être utilisée pour renouveler une clef dont la date d'expiration est proche, en la remplaçant par une nouvelle clef obtenue.

Dans un mode de réalisation, le procédé conforme à l'invention comporte en outre :

- une étape d'obtention d'une commande de remplacement d'une ancienne clef définie dans un domaine, par la clef obtenue ;
- une étape de vérification que l'ancienne clef est associée à l'identifiant unique ; et
- si et seulement si l'ancienne clef est associée à l'identifiant unique, une étape de suppression de l'ancienne clef de la mémoire.

Dans ce mode, l'étape de vérification est mise en oeuvre après l'étape d'obtention de l'identifiant unique. Vérifier que l'ancienne clef est associée à l'identifiant unique permet de vérifier que la nouvelle clef est définie dans le même domaine que l'ancienne clef.

Dans un mode de réalisation, le procédé comporte en outre une étape de décrémentation du compteur de liens du domaine suite à la suppression de l'ancienne clef.

De préférence, le compteur est décrémenté (suite à la suppression de l'ancienne clef) après avoir été incrémenté suite à l'enregistrement de la clef courante. Cela permet de mettre à jour les clefs du domaine tout en évitant de supprimer le domaine et son identifiant unique de la mémoire lorsqu'aucune clef n'est associée à ce domaine.

Dans un mode de réalisation, la validation du domaine comporte une vérification de toutes les propriétés mathématiques entre tous les paramètres de ce domaine.

Considérons à titre indicatif un domaine D d'une courbe elliptique E. Ce domaine D est un sous-groupe de la courbe elliptique E définie sur un corps fini Fp et définissant une loi d'addition +, ce sous-groupe ayant un élément générateur G d'ordre q, où p et q sont des nombres entiers. L'élément générateur G, le nombre p correspondant au nombre d'éléments du corps fini Fp, et le nombre q constituent des paramètres du domaine D.

La validation du domaine D comporte la vérification que chacun des paramètres p et q est un nombre premier, et que le paramètre G est bien d'ordre q.

Le domaine D peut comporter d'autres paramètres tels que:

- une valeur FR de représentation du domaine (pour « Field Représentation » en anglais), cette valeur FR correspondant à une indication sur la manière de représenter un élément appartenant au corps fini Fp ;
- des nombres a et b, qui sont des éléments appartenant au corps fini Fp et qui correspondent à des coefficients permettant de définir l'équation de la courbe elliptique considérée, à savoir une équation de type :

$$[\text{Math. 1}] \quad y^2 = x^3 + ax + b$$

lorsque la caractéristique du corps Fp est un nombre premier strictement supérieur à 2, ou une équation de type :

$$[\text{Math. 2}] \quad y^2 + xy = x^3 + ax^2 + b$$

lorsque la caractéristique du corps Fp est égale à 2, cette caractéristique étant le nombre p des éléments du corps Fp si p est un nombre premier ;
- un paramètre de graine S (pour « seed » en anglais), ayant été utilisé pour générer les éléments a et b ;
- un point P appartenant à la courbe elliptique, dont les coordonnées affines vérifient l'équation 1 ou 2 de la courbe elliptique susmentionnée, le point P est d'ordre n où n est un nombre premier, le point P peut être défini soit en cordonnée affine, soit selon une autre représentation (par exemple jacobéenne); et
- un cofacteur h de la courbe elliptique, vérifiant l'égalité suivante :

$$[\text{Math. 3}] \quad h = \#E(Fp)/n$$

où #E(Fp) correspond au nombre de points appartenant à la courbe elliptique considérée E.

La validation du domaine comporte en outre la vérification des relations mathématiques entre ces paramètres FR, a, b, S, P et h.

Dans un autre mode de réalisation, la validation du domaine comporte une détermination que ce domaine a été généré par une entité de confiance. Ce dernier mode ne requiert pas la vérification des propriétés mathématiques. A titre d'exemple, ce mode peut être mis en oeuvre par une puce intégrée dans un passeport délivré par un Etat, lorsque cette puce obtient la clef cryptographique d'une borne de contrôle (deuxième dispositif au sens de l'invention) gérée par le même Etat.

Nous notons que si la validation du domaine échoue, le premier dispositif conforme à l'invention détermine qu'il est impossible d'utiliser la clef définie dans ce domaine pour effectuer l'opération cryptographique. Conformément à la spécification ICAO TR 3110 v2.10, le premier dispositif informe le deuxième dispositif que le domaine n'a pas pu être validé.

Dans un mode de réalisation, l'étape d'obtention de l'identifiant unique du domaine comporte un calcul de celui-ci par une application d'une fonction à sens unique à au moins un paramètre parmi les paramètres du domaine, l'étape de validation comporte une détection d'au moins une partie de l'identifiant unique calculé dans la mémoire dudit premier dispositif électronique, une information de validation étant délivrée en cas de détection effective.

Le ou les paramètres auxquels la fonction à sens unique est appliquée, sont sélectionnés de sorte à pouvoir déterminer le domaine de façon unique ou au moins avec une grande probabilité, supérieure à un certain seuil. Par exemple, un paramètre de type « point générateur » permet de déterminer un domaine avec une grande probabilité, par exemple de l'ordre de $1-2^{-x}$ (autrement dit une probabilité complémentaire à $2^x$), où x est la taille en bits de l'empreinte du domaine.

Dans un mode de réalisation, les paramètres du domaine définissent des courbes elliptiques, l'obtention de l'identifiant unique comportant un calcul de l'identifiant unique par une application d'une fonction de hachage sur l'ensemble des paramètres.

Dans un mode de réalisation, le domaine est de type DH (pour «Diffie-Hellman »). Nous rappelons qu'un domaine de type DH est un sous-groupe d'une courbe E définie sur un corps fini Fp, ce sous-groupe ayant un élément générateur G d'ordre q, où p et q sont des nombres entiers. La courbe E a un nombre de points qui peut se décomposer en un produit entre le nombre premier q et une valeur h. L'élément générateur G, le nombre p correspondant au nombre d'éléments du corps fini Fp, le nombre q, et la valeur h constituent des paramètres du domaine de type DH. La validation d'un domaine de type DH comporte la vérification que chacun des paramètres p et q est un nombre premier, et que le paramètre G est bien d'ordre q.

Dans un mode de réalisation, l'identifiant unique est au moins une partie d'une coordonnée d'un élément générateur du domaine, par exemple les 4 premiers octets de la coordonnée des abscisses (x) du point générateur.

Alternativement, l'identifiant unique peut être une chaîne de caractère. Cette chaîne peut être définie arbitrairement dans une norme de référence. A titre d'exemple, l'identifiant unique peut être le nom du domaine sous forme de chaînes de caractère.

Alternativement, l'identifiant unique peut être au moins une partie d'une empreinte obtenue à partir de l'application d'une fonction à sens unique à au moins un paramètre du domaine. La dite au moins une partie doit contenir suffisamment d'entropie pour éviter des collisions, autrement dit pour éviter que deux domaines différents aient un même identifiant.

L'invention vise également un système permettant de déterminer la possibilité d'utilisation d'une clef cryptographique pour effectuer une opération cryptographique, ce système comportant un premier dispositif électronique conforme à l'invention, tel que décrit précédemment, et un deuxième dispositif électronique, le deuxième dispositif étant un dispositif de fabrication et/ou de mise à jour du premier dispositif.

L'invention vise également un programme d'ordinateur sur un support d'enregistrement, ce programme étant susceptible d'être mis en oeuvre dans un ordinateur ou un premier dispositif conforme à l'invention. Ce programme comporte des instructions adaptées à la mise en oeuvre d'un procédé permettant de déterminer la possibilité d'utilisation d'une clef cryptographique pour effectuer une opération cryptographique tel que décrit ci-dessus.

Ce programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du programme d'ordinateur tel que mentionné ci-dessus.

Le support d'information ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé conforme à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 est un organigramme représentant des étapes d'un procédé conforme à l'invention, mis en oeuvre selon un premier mode de réalisation ;

[Fig. 2A-2B] les figures 2A et 2B illustrent des exemples de données enregistrées dans une mémoire d'un premier dispositif conforme à l'invention, selon le premier mode de réalisation de l'invention ;

[Fig. 3] la figure 3 est un organigramme représentant des étapes d'un procédé conforme à l'invention, mis en oeuvre selon un deuxième mode de réalisation ;

[Fig. 4] la figure 4 est un organigramme représentant des étapes d'un procédé conforme à l'invention, mis en oeuvre selon un troisième mode de réalisation ;

[Fig. 5] la figure 5 présente des architectures fonctionnelles d'un système, d'un premier dispositif et d'un deuxième dispositif conformes à l'invention; et

[Fig. 6] la figure 6 présente une architecture matérielle d'un premier dispositif selon un mode de réalisation de l'invention.

Description des modes de réalisation

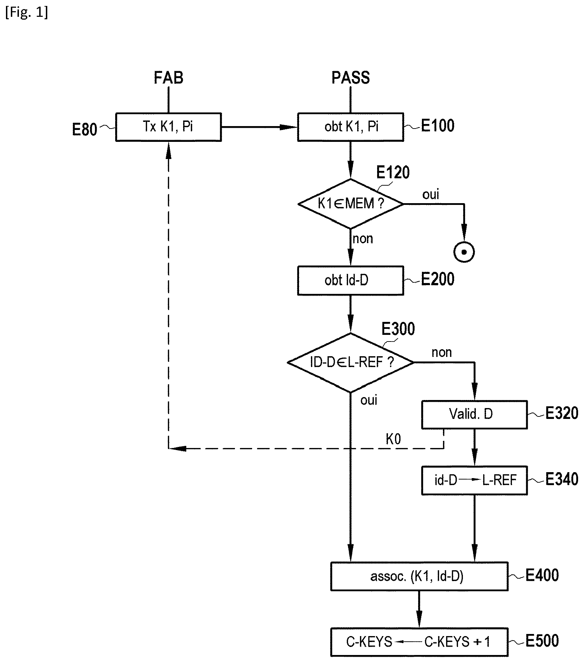

La **figure 1** est un organigramme représentant des étapes du procédé conforme à l'invention, permettant de déterminer la possibilité d'utilisation d'une clef cryptographique pour effectuer une opération cryptographique, selon un premier mode de réalisation de l'invention.

Le procédé est mis en oeuvre par un premier dispositif électronique PASS intégré dans un document d'identification. En particulier, les étapes E100, E200, E300, E320, E340, E400 et E500 décrites ci-après sont des étapes du procédé selon l'invention.

Dans le mode décrit ici, le procédé est mis en oeuvre lors de la fabrication du premier dispositif PASS conforme à l'invention, par un deuxième dispositif électronique FAB. Cependant, les étapes décrites ci-après peuvent aussi être mises en oeuvre durant la vie du premier dispositif PASS.

Le premier dispositif PASS peut être intégré dans un passeport, et le deuxième dispositif peut être un dispositif de fabrication de puces électroniques à intégrer dans des passeports biométriques.

Au cours d'une étape E080, le deuxième dispositif FAB envoie une clef cryptographique K1 au premier dispositif PASS, la clef cryptographique K1 étant définie dans un domaine D comportant des paramètres Pi. Dans cet exemple, le deuxième dispositif FAB essaie d'attribuer la clef K1 au premier dispositif PASS.

Au cours de l'étape E080, le deuxième dispositif FAB envoie également les paramètres Pi au premier dispositif PASS.

Au cours d'une étape E100 du procédé de l'invention, le premier dispositif PASS obtient la clef K1 et les paramètres Pi.

Au cours d'une étape optionnelle E120 du procédé, le premier dispositif PASS vérifie si la clef K1 est déjà enregistrée dans sa mémoire MEM. Si c'est le cas, le premier dispositif PASS met fin à la mise en oeuvre du procédé et détermine que la clef K1 peut être utilisée pour effectuer une opération cryptographique. Nous supposons dans cet exemple que la clef K1 n'est pas enregistrée dans la mémoire MEM.

Au cours d'une étape E200, le premier dispositif PASS obtient un identifiant unique Id-D du domaine D, en calculant cet identifiant Id-D à partir des paramètres Pi.

A titre d'exemple, le calcul de l'identifiant Id-D peut comporter une application d'une fonction à sens unique à au moins un des paramètres Pi.

Lorsque les paramètres Pi du domaine D définissent des courbes elliptiques, le calcul (E200) de l'identifiant unique Id-D peut comporter une application d'une fonction de hachage sur l'ensemble des paramètres Pi.

Le tableau 1 illustre un exemple de paramètres Pi définissant une courbe de Koblitz à 192 bits, ces paramètres Pi comportant un nombre premier p, correspondant au nombre d'éléments du corps fini dans lequel le domaine D est défini, deux éléments a et b appartenant au corps fini et permettant de définir l'équation de la courbe de Koblitz, des coordonnées Gx et Gy du point générateur de la courbe, un nombre premier n correspondant à l'ordre du point générateur et un cofacteur h de la courbe de Koblitz.

[Tableau 1]

| Pi | Valeur de Pi |
|----|--------------|
| p | FFFFFFFF FFFFFFFF FFFFFFFF FFFFFFFF FFFFFFFE FFFFEE37 |
| a | 00000000 00000000 00000000 00000000 00000000 00000000 |
| b | 00000000 00000000 00000000 00000000 00000000 00000003 |
| Gx | DB4FF10E C057E9AE 26B07D02 80B7F434 1DA5D1B1 EAE06C7D |
| Gy | 9B2F2F6D 9C5628A7 844163D0 15BE8634 4082AA88 D95E2F9D |
| n | FFFFFFFF FFFFFFFF FFFFFFFE 26F2FC17 0F69466A 74DEFD8D |
| h | 01 |

Dans cet exemple, l'identifiant Id-D peut être la chaine de caractères « Koblitz192 » correspondant au nom du domaine. Alternativement, l'identifiant unique peut avoir la valeur « DB4FF10E » qui correspond à une partie de la cordonnée des abscisses Gx du point générateur du domaine D.

Alternativement, l'identifiant unique Id-D peut être l'empreinte « 1CF0E8EE0C2C65A283C9 » obtenue par une application d'une fonction de hachage sur l'ensemble des paramètres (p, a, b, Gx, Gy, n, h).

Au cours d'une étape E300, le premier dispositif PASS cherche l'identifiant unique Id-D dans une liste L-REF d'identifiants de domaines validés, cette liste L-REF étant sauvegardée dans une mémoire MEM du premier dispositif PASS.

Comme nous décrivons ici la mise en œuvre du procédé de l'invention lors de la fabrication du premier dispositif PASS, la liste L-REF est initialement vierge. Le premier dispositif PASS ne trouve pas l'identifiant Id-D dans la liste L-REF et déduit que le domaine D n'est pas encore validé.

Au cours d'une étape E320, le premier dispositif PASS valide le domaine D. La validation E320 comporte une vérification de toutes les propriétés mathématiques entre tous les paramètres Pi du domaine D.

Si la validation (E320) échoue, le premier dispositif PASS envoie une notification au deuxième dispositif FAB selon la spécification ICAO TR 3110 v2.10. Pour la suite de la description, nous supposons que la validation E320 est réussie.

Au cours d'une étape E340, le premier dispositif PASS enregistre l'identifiant unique Id-D du domaine D dans la liste L-REF de domaines validés.

Au cours d'une étape E400, le premier dispositif PASS enregistre la clef K1 en association avec l'identifiant unique Id-D. Suite à cet enregistrement E400, la clef K1, associée à un identifiant d'un domaine validé, peut être utilisée pour effectuer une opération cryptographique.

Dans cet exemple, la clef K1 est attribuée par le dispositif de fabrication FAB au premier dispositif conforme à l'invention.

Au cours d'une étape E500, le premier dispositif PASS incrémente un compteur C-KEYS de clefs cryptographiques associées à l'identifiant Id-D.

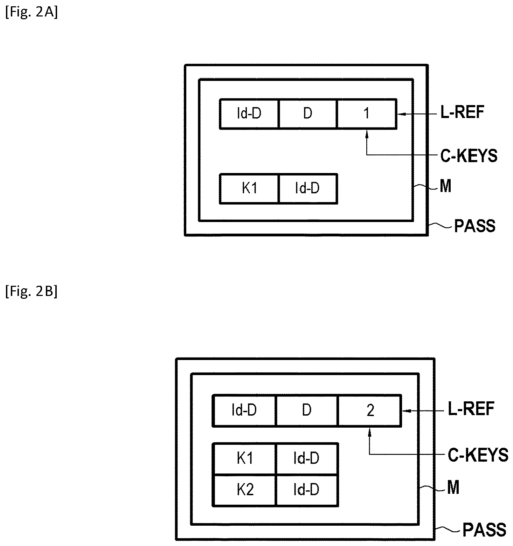

Les **figures 2A et 2B** représentent des exemples de données enregistrées dans la mémoire MEM du premier dispositif PASS, selon un mode de réalisation de l'invention.

La figure 2A présente le contenu de la mémoire MEM suite à la mise en œuvre du procédé selon le mode de réalisation décrit en référence à la figure 1. La mémoire MEM comporte la Liste L-REF de domaines validés, et la clef K1 en association avec l'identifiant unique Id-D.

La liste L-REF comporte l'identifiant unique Id-D du domaine D, le domaine D, et le compteur C-KEYS de clefs associées à l'identifiant Id-D. La valeur du compteur C-KEYS est égale à 1.

Supposons que le deuxième dispositif FAB attribue une deuxième clef K2 au premier dispositif PASS, la deuxième clef K2 étant définie dans le domaine D également.

Le premier dispositif PASS met en œuvre des étapes E100, E200 et E300, similaires aux étapes E100, E200 et E300 décrites en référence à la figure 1. Au cours de ces étapes, le premier dispositif PASS obtient (E100) la clef K2 et des paramètres Pi, calcule (E200) l'identifiant unique Id-D, et cherche (E300) cet identifiant Id-D dans la liste L-REF.

Dans cet exemple, le premier dispositif PASS retrouve (E300) l'identifiant Id-D dans la liste L-REF et déduit que le domaine D est déjà validé. Le premier dispositif met directement en œuvre des étapes E400 et E500, similaires aux étapes E400 et E500 décrites en référence à la figure 1, pour enregistrer (E400) la nouvelle clef K2 en association avec l'identifiant Id-D et pour incrémenter (E500) le compteur C-KEYS.

La figure 2B présente le contenu de la mémoire MEM suite à la mise en œuvre du procédé de l'invention pour attribuer la deuxième clef K2 au premier dispositif PASS. La mémoire MEM comporte la Liste L-REF de domaines validés, et les deux clefs K1 et K2 en association avec l'identifiant unique Id-D. La liste L-REF comporte l'identifiant unique Id-D, le domaine D, et le compteur C-KEYS avec une valeur égale à 2.

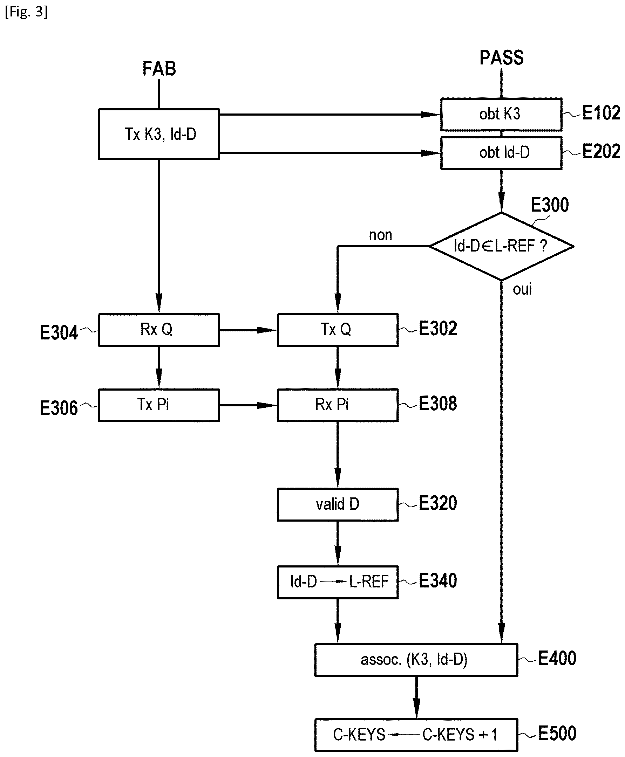

La **figure 3** est un organigramme représentant des étapes du procédé conforme à l'invention, permettant de déterminer la possibilité d'utilisation d'une clef cryptographique pour effectuer une opération cryptographique, selon un deuxième mode de réalisation de l'invention.

Le procédé est mis en œuvre par le premier dispositif électronique PASS intégré dans un document d'identification. En particulier, les étapes E102, E202, E300, E302, E308, E320, E340, E400 et E500 décrites ci-après sont des étapes du procédé selon l'invention.

Dans ce mode, le deuxième dispositif FAB envoie une clef K3 définie dans le domaine D au premier dispositif PASS conforme à l'invention.

Ce deuxième mode de réalisation diffère du premier mode décrit en référence à la figure 1 en ce que le deuxième dispositif FAB calcule lui-même l'identifiant unique Id-D du domaine D et envoie, au cours d'une étape E090, cet identifiant Id-D avec la clef K3 au premier dispositif PASS. Le deuxième dispositif FAB n'envoie pas les paramètres Pi au cours de l'étape E090.

Au cours d'une étape E102, le premier dispositif PASS obtient la clef K3.

Au cours d'une étape E202, le premier dispositif PASS obtient l'identifiant unique Id-D, calculé par le deuxième dispositif FAB à partir des paramètres Pi.

Au cours d'une étape E300 similaire à l'étape E300 décrite en référence à la figure 1, le premier dispositif PASS cherche l'identifiant Id-D dans la liste L-REF.

Si l'identifiant Id-D est retrouvé, le premier dispositif PASS met en œuvre des étapes E400 et E500, similaires aux étapes E400 et E500 décrites en référence à la figure 1, pour enregistrer la clef K3 en association avec l'identifiant Id-D et pour incrémenter le compteur C-KEYS.

Sinon, le premier dispositif PASS envoie au cours d'une étape E302, une demande des paramètres Pi du domaine D auprès du deuxième dispositif FAB.

Le deuxième dispositif reçoit cette demande au cours d'une étape E304, et envoie les paramètres Pi au premier dispositif PASS au cours d'une étape E306.

Au cours d'une étape E308, le premier dispositif PASS reçoit les paramètres Pi.

Au cours d'une étape E320 similaire à l'étape E320 décrite en référence à la figure 1, le premier dispositif PASS valide le domaine D en vérifiant les relations mathématiques entre ses paramètres Pi.

Au cours d'une étape E340 similaire à l'étape E340 décrite en référence à la figure 1, le premier dispositif PASS enregistre l'identifiant Id-D dans la liste L-REF.

Le premier dispositif PASS enregistre au cours de l'étape E400 la clef K3 en association avec l'identifiant Id-D du domaine d validé, et incrémente le compteur C-KEYS au cours de l'étape E500.

Nous notons que le premier et le deuxième mode décrits en référence aux figures 1 à 3 sont relatifs à la fabrication du premier dispositif PASS et à l'attribution des clefs K1, K2 et K3 au premier dispositif PASS. Pour cela, le premier dispositif PASS enregistre (E400) ces clefs dans sa mémoire MEM.

Dans un autre mode de réalisation, le premier dispositif PASS ne met pas en œuvre l'étape E400 d'enregistrement des clefs en association avec l'identifiant unique D. Le premier dispositif PASS détermine qu'il peut utiliser une clef K1, K2 ou K3 pour effectuer une opération cryptographique si et seulement si l'identifiant unique Id-D du domaine D de définition de cette clef est enregistré dans la liste L-REF.

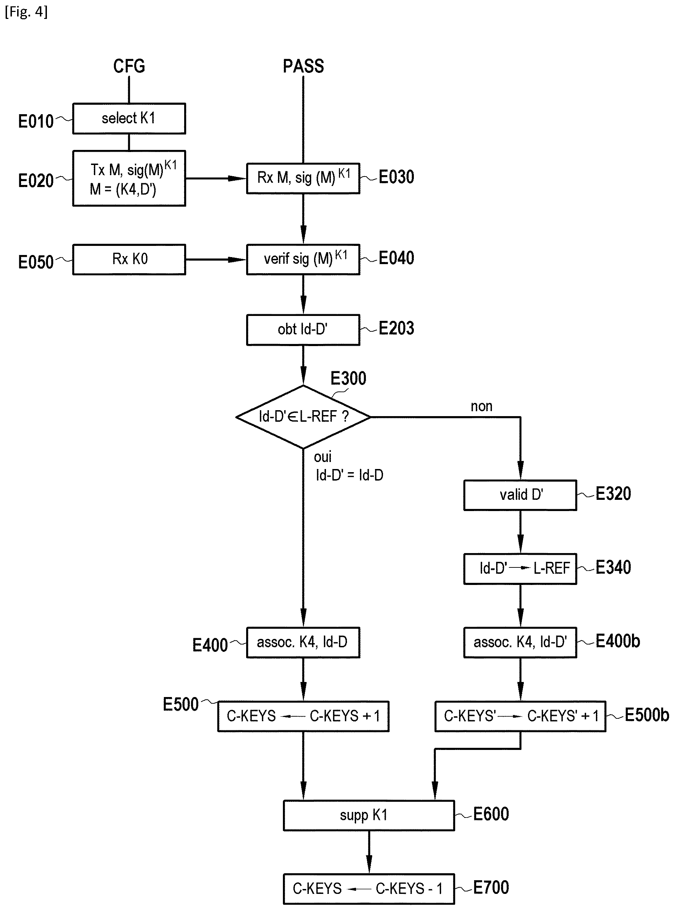

La **figure 4** est un organigramme représentant des étapes du procédé conforme à l'invention, permettant de déterminer la possibilité d'utilisation d'une clef cryptographique pour effectuer une opération cryptographique, selon un troisième mode de réalisation de l'invention.

Le procédé est mis en œuvre par le premier dispositif électronique PASS intégré dans un document d'identification. En particulier, les étapes E030, E040, E203, E300, E320, E340, E400, E500, E600 et E700 décrites ci-après sont des étapes du procédé selon l'invention.

Dans ce troisième mode, le premier dispositif PASS conforme à l'invention est configuré par un deuxième dispositif CFG, ce deuxième dispositif étant un dispositif de mise à jour du premier dispositif PASS.

Dans ce mode, le deuxième dispositif CFG envoie au premier dispositif PASS une commande de remplacement de la clef K1 enregistrée dans la mémoire MEM du premier dispositif PASS, par une nouvelle clef K4 définie dans un domaine D'.

Au cours d'une étape E010, le dispositif de mise à jour CFG sélectionne l'une des clefs du premier dispositif PASS (la clef K1 dans cet exemple), la clef sélectionnée étant à remplacer par la nouvelle clef K4.

Au cours d'une étape E020, le dispositif de mise à jour CFG envoie au premier dispositif PASS, un message M et une signature du message M par la clef sélectionnée K1. Le message M comporte la clef K4 et une information sur le domaine D' de la clef K4, par exemple les paramètres du domaine D' et/ou un identifiant unique du domaine D'.

Le premier dispositif PASS reçoit le message M et la signature de ce message au cours d'une étape E030.

Au cours d'une étape E040, le premier dispositif PASS vérifie la signature du message M, selon une méthode de l'état de la technique. Si la vérification E040 échoue, le premier dispositif envoie une notification au deuxième dispositif CFG, qui la reçoit au cours d'une étape E050.

Nous supposons dans cet exemple que la vérification E040 de la signature est réussie.

Au cours d'une étape E203, le premier dispositif PASS obtient un identifiant unique Id-D' du domaine D'. L'étape E203 peut être similaire à l'étape E200 décrite en référence à la figure 1 : le premier dispositif PASS calcule l'identifiant unique Id-D' à partir de paramètres du domaine D', ces paramètres pouvant être inclus dans le message M. Alternativement, l'identifiant unique Id-D' peut être obtenu à partir du message M.

Au cours d'une étape E300, similaire aux étapes E300 décrites en référence aux figures 1 et 2, le premier dispositif PASS cherche l'identifiant Id-D' dans la liste L-REF de domaines validés.

Nous supposons ici que le domaine D' est identique au domaine D. L'identifiant Id-D' est le même que l'identifiant Id-D, déjà enregistré dans la liste L-REF. Le premier dispositif enregistre la nouvelle clef K4 en association avec l'identifiant Id-D, au cours d'une étape E400, et incrémente le compteur C-KEYS au cours d'une étape E500, les étapes E400 et E500 sont similaires aux étapes E400 et E500 décrites en référence aux figures 1 et 3.

Après l'étape E500 d'incrémentation du compteur C-KEYS, et au cours d'une étape E600, le premier dispositif PASS supprime la clef K1 de sa mémoire MEM.

Au cours d'une étape E700, le premier dispositif PASS décrémente le compteur C-KEYS.

Si l'identifiant Id-D' n'est pas retrouvé (E300) dans la liste L-REF, le premier dispositif PASS met en œuvre des étapes E320 et E340, similaires aux étapes E320 et E340 décrites en référence aux figures 1 et 3, pour valider le domaine D' et enregistrer son identifiant Id-D' dans la liste L-REF. Le premier dispositif PASS enregistre la clef K4 en association avec l'identifiant Id-D' au cours d'une étape E400b, et incrémente un nouveau compteur C-KEYS' au cours d'une étape E500b, le compteur C-KEYS' étant un compteur de clefs associées à l'identifiant Id-D'. Le premier dispositif PASS supprime (E600) ensuite la clef K1 de la mémoire MEM et décrémente (E700) le compteur C-KEYS.

Dans un mode de réalisation, le premier dispositif PASS conforme à l'invention ne remplace une ancienne clef K1 par une nouvelle clef K4 que lorsque les deux clefs K1 et K4 sont définies dans un même domaine D.

Dans un autre mode, le premier dispositif PASS remplace l'ancienne clef K1 par la clef K4 même si ces deux clefs sont définies dans deux domaines différents.

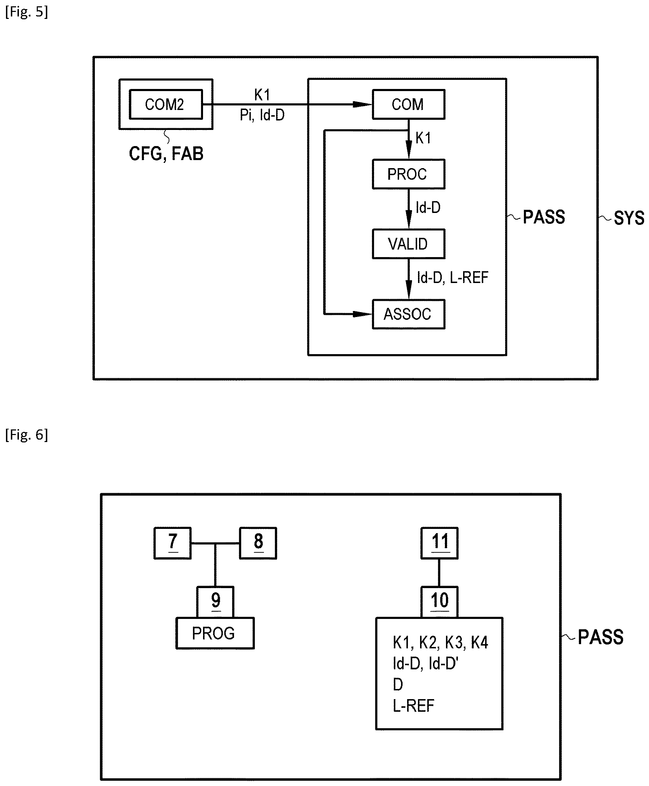

La **figure 5** représente des architectures fonctionnelles, selon un mode de réalisation de l'invention, d'un système SYS de traitement de clefs cryptographiques, du premier dispositif PASS conforme à l'invention et du deuxième dispositif FAB ou CFG.

Le système SYS comporte le premier dispositif PASS et le deuxième dispositif FAB ou CFG.

Le premier dispositif PASS est intégré dans un document d'identification. Il est configuré pour déterminer la possibilité d'utilisation d'une clef cryptographique (K1 par exemple) pour effectuer une opération cryptographique, la clef cryptographique étant définie dans un domaine D comportant des paramètres Pi, le premier dispositif PASS comportant :

- un module de communication COM avec le deuxième dispositif électronique FAB, CFG, le module de communication COM étant configuré pour obtenir (E100, E102, E030) la clef K1 en provenance du deuxième dispositif ;
- un module PROC d'obtention (E200, E202) de l'identifiant unique Id-D du domaine D, l'identifiant unique étant calculé à partir des paramètres Pi ;

- un module de validation VALID configuré pour :

-- rechercher (E300) l'identifiant unique Id-D dans une liste L-REF d'identifiants de domaines validés, la liste étant sauvegardée dans une mémoire MEM du premier dispositif PASS ; et

-- si et seulement si l'identifiant unique Id-D n'est pas retrouvé dans la liste L-REF, valider (E320) cryptographiquement le domaine D et enregistrer (E340) l'identifiant unique Id-D dans la liste L-REF uniquement si la validation est réussie.

La clef cryptographique K1 peut être utilisée pour effectuer l'opération cryptographique si et seulement si l'identifiant unique Id-D est enregistré dans la liste L-REF.

Dans les modes de réalisation décrits en référence aux figures 1 à 4, le premier dispositif PASS conforme à l'invention comporte en outre un module d'association ASSOC configuré pour enregistrer (E400) la clef cryptographique K1 en association avec l'identifiant unique Id-D dans la mémoire MEM.

Le deuxième dispositif FAB, CFG comporte un module de communication COM2 avec le premier dispositif PASS conforme à l'invention. Ce module COM2 est configuré pour envoyer (E080, E090) une clef, K1 par exemple, au premier dispositif PASS.

Dans le premier mode décrit en référence à la figure 1, le module COM2 est configuré pour envoyer (E080) en outre les paramètres Pi au premier dispositif PASS.

Dans le deuxième mode décrit en référence à la figure 3, le module COM2 est configuré pour envoyer (E090) en outre l'identifiant unique Id-D au premier dispositif PASS.

Le premier dispositif PASS conforme à l'invention est intégré dans un document d'identification tel qu'un passeport, une carte d'identité nationale, un permis de conduire, une carte bancaire, une carte d'assurance, un titre personnel de transport ou une carte permettant un accès à un espace sous identification.

Dans le mode de réalisation décrit ici, le premier dispositif PASS a l'architecture matérielle d'un ordinateur, telle qu'illustrée à la **figure 6.**

L'architecture du premier dispositif PASS comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du premier dispositif PASS selon l'invention constitue un support d'enregistrement conforme à l'invention, lisible par le processeur 7 et sur lequel est enregistré ici un programme d'ordinateur PROG conforme à l'invention.

La mémoire 10 du premier dispositif PASS, est comprise dans la mémoire MEM décrite en référence aux figues 1 à 5. La mémoire 10 permet d'enregistrer des variables utilisées pour l'exécution des étapes du procédé selon l'invention, telles que les clefs K1 à K4, les identifiants Id-D et Id-D', le domaine D et la liste L-REF.

Le programme d'ordinateur PROG définit des modules fonctionnels et logiciels ici, configurés pour déterminer la possibilité d'utiliser une clef pour effectuer une opération cryptographique. Ces modules fonctionnels s'appuient sur et/ou commandent les éléments matériels 7-11 du premier dispositif PASS cités précédemment.

## Revendications

**1.** Procédé, mis en œuvre par un premier dispositif électronique (PASS) intégré dans un document d'identification, permettant de déterminer la possibilité d'utilisation d'une clef cryptographique (K1, K2) pour effectuer une opération cryptographique, ladite clef cryptographique étant définie dans un domaine (D) comportant des paramètres (Pi), ledit procédé comportant une étape de:

- obtention (E100, E102, E030) de ladite clef en provenance d'un deuxième dispositif électronique (FAB, CFG), ledit procédé étant **caractérisé en ce qu'**il comporte en outre des étapes de :
- obtention (E200, E202) d'un identifiant unique (Id-D) dudit domaine, ledit identifiant unique étant calculé à partir desdits paramètres;
- recherche (E300) dudit identifiant unique dans une liste (L-REF) d'identifiants de domaines validés, ladite liste étant sauvegardée dans une mémoire dudit premier dispositif ;
- si et seulement si ledit identifiant unique n'est pas retrouvé dans ladite liste,

-- validation (E320) dudit domaine ; et
-- enregistrement (E340) dudit identifiant unique dans ladite liste uniquement si la validation est réussie ;

ladite clef pouvant être utilisée pour effectuer l'opération cryptographique si et seulement si ledit identifiant unique

EP 3 836 480 A1

(Id-D) est enregistré dans ladite liste (L-REF).

2. Procédé selon la revendication 1 dans lequel ladite opération cryptographique est une opération autorisant un accès d'un utilisateur dudit document d'identification à une zone géographique déterminée, ou une opération effectuant des statistiques sur la présence de l'utilisateur dans une zone géographique déterminée, ou une opération de consultation ou de modification de données enregistrées dans la mémoire du premier dispositif.

3. Procédé selon l'une quelconque des revendications 1 ou 2 comportant en outre, si et seulement si ledit identifiant unique (Id-D) est enregistré dans ladite liste (L-REF), une étape d'enregistrement (E400) de ladite clef cryptographique en association avec l'identifiant unique dans la mémoire dudit premier dispositif électronique.

4. Procédé selon la revendication 3 comportant en outre une étape de recherche (E120) de ladite clef dans la mémoire dudit premier dispositif, les étapes d'obtention de l'identifiant unique (E200), de recherche (E300) de l'identifiant unique, de validation (E320), d'enregistrement (E340) de l'identifiant unique, et d'enregistrement (E400) de ladite clef étant mises en œuvre seulement si ladite clef n'est pas déjà enregistrée dans ladite mémoire.

5. Procédé selon l'une quelconque des revendications 1 à 4 comportant en outre une étape d'obtention (E030) d'une commande de remplacement d'une ancienne clef (K1) par la clef obtenue (K4), ledit procédé comportant des étapes de :

   - vérification que l'ancienne clef (K1) est associée à l'identifiant unique (Id-D') obtenu ; et
   - si et seulement si l'ancienne clef est associée à l'identifiant unique, suppression de l'ancienne clef de la mémoire (MEM).

6. Procédé selon l'une quelconque des revendications 1 à 5 dans lequel ladite validation (E320) dudit domaine comporte une détermination que ledit domaine a été généré par une entité de confiance.

7. Procédé selon l'une quelconque des revendications 1 à 5 dans lequel ladite validation (E320) dudit domaine comporte une vérification de propriétés mathématiques entre lesdits paramètres dudit domaine.

8. Procédé selon l'une quelconque des revendications 1 à 7 dans lequel :

   - ladite obtention de l'identifiant unique comporte un calcul dudit identifiant unique par une application d'une fonction à sens unique à au moins un dit paramètre dudit domaine ; et
   - ladite étape de validation comporte une détection d'au moins une partie dudit identifiant unique dans la mémoire dudit premier dispositif électronique, une information de validation étant délivrée en cas de détection effective.

9. Procédé selon l'une quelconque des revendications 1 à 8 dans lequel lesdits paramètres dudit domaine définissent des courbes elliptiques, ladite obtention (E200) de l'identifiant unique (Id-D) comportant une application d'une fonction de hachage sur l'ensemble desdits paramètres.

10. Procédé selon l'une quelconque des revendications 1 à 9 dans lequel l'identifiant unique est au moins une partie d'une coordonnée d'un élément générateur dudit domaine, ou une chaîne de caractère ou au moins une partie d'une empreinte obtenue à partir de l'application d'une fonction à sens unique à au moins un dit paramètre dudit domaine.

11. Programme d'ordinateur (PROG) comportant des instructions pour l'exécution des étapes d'un procédé selon l'une des revendications 1 à 10 lorsque ledit programme est exécuté par un ordinateur.

12. Support d'enregistrement lisible par un ordinateur sur lequel est enregistré un programme d'ordinateur (PROG) selon la revendication 11.

13. Dispositif électronique, dit « premier dispositif électronique », intégré dans un document d'identification et configuré pour déterminer la possibilité d'utilisation d'une clef cryptographique (K1, K2) pour effectuer une opération cryptographique, ladite clef cryptographique étant définie dans un domaine (D) comportant des paramètres (Pi), ledit premier dispositif (PASS) comportant :

   - un module de communication (COM) avec un deuxième dispositif électronique (FAB, CFG), le module de communication étant configuré pour obtenir ladite clef en provenance dudit deuxième dispositif ;
- un module (PROC) d'obtention d'un identifiant unique (Id-D) dudit domaine, ledit identifiant unique étant calculé à partir desdits paramètres dudit domaine ;
- un module de validation configuré pour :

-- rechercher ledit identifiant unique dans une liste (L-REF) d'identifiants de domaines validés, ladite liste étant sauvegardée dans une mémoire dudit premier dispositif ; et
-- si et seulement si ledit identifiant unique n'est pas retrouvé dans ladite liste, valider ledit domaine et enregistrer ledit identifiant unique dans ladite liste uniquement si la validation est réussie ;

ladite clef associée pouvant être utilisée pour effectuer l'opération cryptographique si et seulement si ledit identifiant unique (Id-D) est enregistré dans ladite liste (L-REF).

14. Dispositif électronique (PASS) selon la revendication 13 dans lequel le document d'identification est un document parmi un passeport, une carte d'identité nationale, un permis de conduire, une carte bancaire, une carte d'assurance, un titre personnel de transport ou une carte permettant un accès à un espace sous identification.

15. Système permettant de déterminer la possibilité d'utilisation d'une clef cryptographique (K1, K2) pour effectuer une opération cryptographique, ledit système comportant :

- un premier dispositif électronique selon l'une quelconque des revendications 13 ou 14 ; et
- un deuxième dispositif électronique, ledit deuxième dispositif étant un dispositif de fabrication (FAB) et/ou de mise à jour (CFG) dudit premier dispositif (PASS).

EP 3 836 480 A1

[Fig. 1]

15

[Fig. 2A]

| Id-D | D | 1 | ← L-REF |

← C-KEYS

| K1 | Id-D |

← M

← PASS

[Fig. 2B]

| Id-D | D | 2 | ← L-REF |

← C-KEYS

| K1 | Id-D |
| K2 | Id-D |

← M

← PASS

[Fig. 3]

[Fig. 4]

CFG                                    PASS

E010 — | select K1 |

E020 — | Tx M, sig(M)$^{K1}$ |  →  | Rx M, sig (M)$^{K1}$ | — E030
         | M = (K4,D') |

E050 — | Rx K0 |  →  | verif sig (M)$^{K1}$ | — E040

                       | obt Id-D' | — E203

                          E300
                     ⟨ Id-D'∈L-REF ? ⟩ ——— non ———┐
                                                    │
                    oui                             │
                    Id-D' = Id-D                 | valid D' | — E320
                                                    │
                                                 | Id-D' → L-REF | — E340
                                                    │
E400 — | assoc. K4, Id-D |                       | assoc. K4, Id-D' | — E400b

E500 — | C-KEYS ← C-KEYS + 1 |                   | C-KEYS' ← C-KEYS' + 1 | — E500b

                       | supp K1 | — E600

                       | C-KEYS ← C-KEYS - 1 | — E700

[Fig. 5]

[Fig. 6]

Europäisches
Patentamt

European
Patent Office

Office européen
des brevets

# RAPPORT DE RECHERCHE EUROPEENNE

Numéro de la demande

EP 20 20 6595

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 800 299 A1 (OBERTHUR TECHNOLOGIES [FR]) 5 novembre 2014 (2014-11-05) * alinéas [0006], [0080], [0085], [0090] - [0095] * ----- | 1-15 | INV. H04L9/30 H04L9/32 |
| T | Elaine Barker ET AL: "NIST Special Publication 800-57: Recommendation for Key Management Part 1: General, revision 3", Reommendation for Key Management Part 1: General, 1 juillet 2012 (2012-07-01), XP055307975, DOI: 10.6028/NIST.SP.800-57pt1r3 Extrait de l'Internet: URL:http://nvlpubs.nist.gov/nistpubs/Legacy/SP/nistspecialpublication800-57p1r3.pdf [extrait le 2016-10-05] * sections 3.7 and 5.4 * ----- | | |

| DOMAINES TECHNIQUES RECHERCHES (IPC) |
|---|
| H04L |

Le présent rapport a été établi pour toutes les revendications

| Lieu de la recherche | Date d'achèvement de la recherche | Examinateur |
|---|---|---|
| Munich | 16 avril 2021 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 6595

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2021

| Document brevet cité au rapport de recherche | Date de publication | Membre(s) de la famille de brevet(s) | Date de publication |
|---|---|---|---|
| EP 2800299 A1 | 05-11-2014 | EP 2800299 A1<br>FR 3005186 A1<br>US 2014369493 A1 | 05-11-2014<br>31-10-2014<br>18-12-2014 |

EPO FORM P0460

Pour tout renseignement concernant cette annexe : voir Journal Officiel de l'Office européen des brevets, No.12/82